# EUROPÄISCHE PATENTSCHRIFT

(11) **EP 3 044 183 B1**
(45) Veröffentlichungstag und Bekanntmachung des Hinweises auf die Patenterteilung: **29.11.2017**
(21) Anmeldenummer: 14757928.8
(22) Anmeldetag: 29.08.2014
(51) Int. Cl.: C04B 28/06, C04B 14/30, C04B 111/28

(54) **HYDRAULISCHES BINDEMITTELSYSTEM AUF ALUMINIUMOXIDBASIS**
HYDRAULIC BINDER SYSTEM ON AN ALUMINIUM OXIDE BASIS
SYSTÈME HYDRAULIQUE DE LIANT À BASE D'OXYDE D'ALUMINIUM

(30) Priorität: 11.09.2013 EP 13183911
(43) Veröffentlichungstag der Anmeldung: 20.07.2016
(73) Patentinhaber: Nabaltec AG, 92421 Schwandorf (DE)
(72) Erfinder: DÜNZEN, Christian, 92237 Sulzbach-Rosenberg (DE); LIPINSKI, Tadeusz von Rymon, 53125 Bonn (DE)
(74) Vertreter: Büchel, Edwin
(86) Internationale Anmeldenummer: PCT/EP2014/068384
(87) Internationale Veröffentlichungsnummer: WO 2015/036262

(56) Entgegenhaltungen:
- EP-A1- 0 839 775
- M W Vance ET AL: "Alcoa Industrial Chemicals Steelplant Refractories Containing Alphabond Hydratable Alumina Binders", , 31. Oktober 1996 (1996-10-31), XP055101704, Gefunden im Internet: URL:http://www.almatis.com/media/3976/abpa per.pdf [gefunden am 2014-02-12]
- RACHER R P ET AL: "IMPROVEMENTS IN WORKABILITY BEHAVIOR OF CALCIA-FREE HYDRATABLE ALUMINA BINDERS", PROCEEDINGS OF THE UNIFIED INTERNATIONAL TECHNICAL CONFERENCE ONREFRACTORIES: BIENNIAL WORLDWIDE CONGRESS ON REFRACTORIES.UNITECR, XX, XX, 11. November 2005 (2005-11-11), Seiten 402-407, XP008071554,

## Beschreibung

Die vorliegende Erfindung betrifft ein hydraulisches Bindemittelsystem auf Basis von kalziniertem Aluminiumoxid zur Anwendung in feuerfesten Materialien. Die Erfindung betrifft weiterhin ein Verfahren zur Herstellung des hydraulischen Bindermittelsystems sowie dessen Verwendung.

Feuerfest-Erzeugnisse werden in allen Industriezweigen eingesetzt, in welchen eine Prozessführung bei hohen Temperaturen erforderlich ist. Das ist beispielsweise in den Branchen der Metallgewinnung und -Verarbeitung und in der Zement-, Kalk-, Gips-, Glas- und Keramikindustrie der Fall.

Die wichtigsten Feuerfest-Erzeugnisse sind geformte dichte Erzeugnisse (Steine, Bauteile), geformte wärmedämmende Erzeugnisse (Feuerleichtsteine), ungeformte feuerfeste Erzeugnisse (Feuerbetone, Rammmassen, Spritzmassen, Stampfmassen) oder Fertigteile (Formteile, Blöcke).

Weltweit werden zurzeit circa 41,5 Mio. t/Jahr Feuerfest-Erzeugnisse hergestellt (Ted Dickson, TAK Industrial Mineral Consultancy; The Refractories Industry Worldwide 2012 - 2017; A Market/Technology Report, Seite 1). Unter den ungeformten Feuerfest-Erzeugnissen nehmen Feuerbetone eine herausragende Stellung ein. Ihr Anteil an der gesamten Feuerfest-Produktion nimmt stetig zu und liegt in den industrialisierten Ländern teilweise deutlich über 50 %.

In Feuerfest-Betonen ist die hydraulische Bindung auf Calciumaluminat(CA)-Zement-Basis sehr verbreitet. Insbesondere zwei Zementtypen finden in der Regel als hydraulische Binder Anwendung; zum einen Tonerdezemente, enthaltend 40 bis 50 Gew.-% Aluminiumoxid, 38 Gew.-% Calciumoxid und 4 bis 15 Gew.-% Eisenoxid. Zum anderen seien Hochtonerdezemente mit 70 bis 80 Gew.-% Aluminiumoxid und 20 bis 30 Gew.-% Calciumoxid zu nennen.

Derartige CA-Zemente werden nach einem aufwändigen und energieintensiven Prozess aus einer Mischung eines Aluminiumoxid-Trägers, beispielsweise Tonerde oder Aluminiumhydroxid, und eines Calciumoxid-Trägers, beispielsweise Calciumcarbonat oder Calciumhydroxid, durch Sintern, beziehungsweise Schmelzen bei hohen Temperaturen hergestellt. Um die erforderliche Bindeaktivität zu erreichen, muss das gesinterte Material, der sogenannte Klinker, anschließend fein gemahlen werden. Eine theoretische Betrachtung des Energiebedarfs für den notwendigen Hochtemperaturbrand zeigt dabei, dass etwa 50 % der gesamten Energie ausschließlich für die Erwärmung der Aluminiumoxid-Komponente auf die Prozesstemperatur benötigt werden.

Einen weiteren signifikanten Nachteil bei der Verwendung von CA-Zementen stellt der vergleichsweise hohe Calciumoxid-Gehalt dar, welcher die Korrosionsbeständigkeit eines Feuerfest-Betons, und in Kombination mit SiO₂, auch die Festigkeit bei hohen Temperaturen beeinträchtigen kann.

Es besteht deshalb ein stetiger Bedarf an neuen, zementfreien Betonen.

Zementfreie Bindemittelsysteme sind bereits bekannt.

Zum einen ist die Bindung mit kolloidaler Kieselsäure zu nennen. Beim Trocknen entsteht ein SiO₂-Bindegerüst um die Körner. Die SiO₂-Bindung ist bei niedrigen Temperaturen relativ schwach. Die Betone mit derartiger Bindung brauchen deswegen während der Abbindung eine Verschalung und Erwärmung. Nachteilig kann sich die SiO₂-Komponente auf die Korrosionsbeständigkeit und thermomechanischen Eigenschaften der Feuerfest-Betone auswirken. Ein weiterer technisch relevanter Nachteil dieses Bindungstyps ist die Frostempfindlichkeit, da der Binder durch Frosteinwirkung zerstört wird.

Eine weitere Möglichkeit der zementfreien Bindung ist die Bindung mit Wasserglas. Der Bindemechanismus und die Bindeeigenschaften ähneln denen der kolloidalen Kieselsäure. Durch die mit dem Wasserglas eingeführten Alkalien werden die thermomechanischen Eigenschaften und die Korrosionsbeständigkeit des feuerfesten Werkstoffes jedoch dauerhaft beeinträchtigt.

Bei der Phosphatbindung kommen als Binder in den meisten Fällen Phosphorsäure beziehungsweise ihre Aluminiumsalze zur Anwendung. Eine ausreichende Bindekraft entwickelt sich in der Regel erst durch eine Polykondensationsreaktion, die durch Aufheizen über 200 °C initiiert wird. Die Anwesenheit von Phosphationen ist oft ein gravierender Nachteil dieser Bindungsart.

Weiterhin werden Magnesiabinder (wie beispielsweise in Sorelzement) verwendet. Dabei reagiert eine Magnesiumchlorid-/sulfat-Lösung mit Magnesiumoxid beziehungsweise - hydroxid zu schwer löslichen Salzen, sogenannten Magnesiumoxichloriden/-sulfaten. Diese Bindemittel werden jedoch der Gruppe der chemischen Bindemittel zugeordnet und stellen somit keine hydraulischen Bindemittel dar. Derartige Magnesiabinder setzen bei Hochtemperaturanwendungen hochkorrosive Dämpfe (HCl/SO₂) frei.

Eine weitere Möglichkeit der zementfreien Bindung besteht in der Verwendung von hydratisierbarer Tonerde, der Rho-Tonerde. Auch dieser Binder weist bei Raumtemperatur nur geringe Festigkeiten auf. Die Verarbeitung von Feuerbetonen, in denen Rho-Tonerde als hydraulisches Bindemittel verwendet wird, ist kritischer als die von zementgebundenen Betonen, da das chemisch gebundene Wasser in einem vergleichsweise sehr engen Temperaturbereich um 150 °C freigesetzt wird. Nach der Dehydratation tritt darüber hinaus bei etwa 1000 °C ein starker Festigkeitsverlust auf. Erst oberhalb Temperaturen von etwa 1250 °C steigt die Festigkeit durch beginnende Sinterung der Alumina-Bindephase stark an. Bei Rho-Tonerde handelt es sich um eine Übergangsmodifikation des Aluminiumoxides. Die spezifische Oberfläche von kommerziell verfügbarer Rho-Tonerde liegt bei >200 m²/g. Diese hohe spezifische Oberfläche erschwert die Dispergierung und somit die Verarbeitbarkeit von Frischbetonen, welche Rho-Tonerde als Binder enthalten. Der Abbindemechanismus beruht darauf, dass Rho-Tonerde bei Raumtemperatur mit Wasser reagiert und ein Aluminiumhydroxid-Gel bildet, welches im Verlauf der weiteren Reaktion erstarrt. Im Gegensatz zu beispielsweise den Hydraten des Zementes, welche feinkristallin ausscheiden und dem Beton eine hohe Permeabilität verleihen, bildet das erstarrte Gel der Rho-Tonerde eine dichte Struktur, welche die Trocknung des Betons behindert. Bei Nichtbeachten dieser Eigenschaft der Rho-Tonerde und zu schnellem Aufheizen des Feuerbetons auf Temperaturen von 200-400°C neigen Rho-Tonerde-gebundene Betone zum Bersten. Beim ersten Aufheizen eines Betons auf eine Temperatur über 1000°C wandeln sich Rho-Tonerde und alle daraus hervorgegangenen Hydratations- und Dehydratationsprodukte in alpha-Aluminiumoxid um. Diese Phasenumwandlung geht mit einer Volumenschwindung einher und führt je nach Körnungsaufbau des Betons entweder zu einer makroskopischen Schwindung des Bauteils, bzw. der Zustellung oder zu einem Anstieg der Porosität. Während der erste Effekt zum Reißen, oder gar zum Ausfall einer Zustellung führen kann, resultiert der zweite Effekt in einer Verschlechterung der Korrosionsbeständigkeit.
Trotzdem sind Betone mit Rho-Tonerde-Bindung solchen mit Zementbindung hinsichtlich Korrosionsbeständigkeit und Hochtemperaturbeständigkeit überlegen. Der Grund dafür liegt in der Abwesenheit von Kalziumoxid.

In EP 0839 775 A1 werden hydraulisch gebundene (*abbindende*), kalziumoxidfreie Feuerfesterzeugnisse beschrieben, die sowohl Rho-Tonerde, als auch Magnesiumoxid beinhalten. Das Magnesiumoxid wird als DBM (Dead burned Magnesia)-Qualität (unreaktiv) eingesetzt. Die Gehalte im Beton liegen bei 4-16 %. Durch die Kombination von Rho-Tonerde mit Magnesiumoxid wird im Vergleich zu Betonen mit reiner Rho-Tonerde-Bindung die Festigkeit verbessert, die Abbindung beschleunigt und der Wasserbedarf erhöht, jedoch verbleiben Nachteile durch die Verwendung von Rho-Tonerde, wie beispielsweise die Volumenschwindung und die Neigung zum Bersten aufgrund der geringen Permeabilität.

*Souza et al*., Systematic Analysis of MgO hydration effects on alumina-magnesia refractory catsables, Ceramic International, *38*, **2012,** 3969 bis 3976, beschreibt die hydraulische Abbindung eines verflüssigten Korundbetons, dotiert mit DBM ("Dead Burned Magnesia" - totgebranntes Magnesiumoxid), wobei die Hydratation des Magnesiumoxids zu Rissbildungen in den Betonen führt. Diese Rissbildung wird durch Verwendung von SiO₂-verunreinigten Magnesiumoxid oder Zugabe von Microsilica unterbunden.

*Salamao et al*., A Novel Magnesia Based Binder (MBB) for Refractory Castables, Ceramic Monographs 2.6.9, Supplement to Interceram, **2011,** 1 bis 4, beschreibt ebenfalls Magnesiabasierte Binder zur Herstellung von feuerfesten Gießmassen. Dazu werden vergleichsweise große Mengen an Magnesia benötigt, um eine Abbindung zu erreichen. Die Abbindung erfolgt dabei bei 50 °C und circa 100 % relativer Luftfeuchtigkeit.

Eine Aufgabe der vorliegenden Erfindung ist es, ein hydraulisches Bindemittelsystem zur Anwendung in feuerfesten Materialien bereit zu stellen, welches die Nachteile der bereits bekannten Bindemittelsysteme nicht zeigt. Insbesondere soll ein hydraulisches Bindemittelsystem bereitgestellt werden, welches gute mechanische Eigenschaften sowie steuerbare Abbindezeiten bei Raumtemperatur aufweist. Weiterhin soll ein solches Bindemittelsystem auch eine hohe Permeabilität des abgebundenen Betons und somit gute Trocknungseigenschaften aufweisen und sich dadurch auszeichnen, dass es weder Übergangsmodifikationen des Aluminiumoxids, welche bei der Umwandlung in alpha-Aluminiumoxid eine Volumenschwindung erfahren können, noch Kalziumoxid, enthält.

Die Aufgabe wird gelöst durch ein hydraulisches Bindemittelsystem zur Anwendung in feuerfesten Materialien, enthaltend
a) 90,0 bis 99,99 Gew.-% mindestens eines kalzinierten Aluminiumoxids A mit einer mittleren Korngröße von 0,3 bis 25,0 µm und einer BET-Oberfläche von 0,5 bis 30,0 m²/g; und
b) 0,01 bis 10,0 Gew.-% mindestens einer Komponente B, ausgewählt aus der Gruppe bestehend aus Magnesiumhydroxid, Calciumhydroxid, Strontiumhydroxid, Bariumhydroxid, sowie deren Hydrate, Magnesiumoxid, Calciumoxid, Strontiumoxid und Bariumoxid;
wobei die jeweiligen Gewichtsanteile auf die Gesamtmenge des hydraulischen Bindemittelsystems bezogen sind.

Es wurde nun überraschend gefunden, dass durch Zugabe geringer Mengen mindestens einer Komponente B eine abbindende Reaktion des mindestens einen kalzinierten Aluminiumoxids A mit Wasser ausgelöst werden kann. Weiterhin wurde gefunden, dass die Abbindung bereits bei Raumtemperatur erfolgen kann. Die Abbindendereaktion tritt ohne Zugabe von Zement ein. Weiterhin tritt die Abbindung ohne Zugabe von kalziniertem Aluminiumoxid mit einer spezifischen Oberfläche > 30 m²/g, wie zum Beispiel Rho-Tonerde ein.

Dementsprechend enthält das erfindungsgemäße, hydraulische Bindemittelsystem keinen Zement. Ebenso ist es bevorzugt, dass das erfindungsgemäße, hydraulische Bindemittelsystem kein kalziniertes Aluminiumoxid mit einer spezifischen Oberfläche > 30 m²/g enthält.

Feuerfester Beton, der unter Verwendung des erfindungsgemäßen, hydraulischen Bindemittelsystems hergestellt wird, weist zumindest eine vergleichbare Konsistenz, eine vergleichbare Abbindezeit, eine vergleichbare Festigkeit und eine vergleichbare Hochtemperaturfestigkeit wie feuerfester Beton auf, der unter Verwendung eines hydraulischen Bindemittelsystems nach dem Stand der Technik, wie z.B. Zement oder Rho-Tonerde hergestellt wurde.

Feuerfester Beton, der unter Verwendung des erfindungsgemäßen, hydraulischen Bindemittelsystems hergestellt wird, kann insbesondere eine geringere Brennschwindung im Vergleich zu feuerfestem Beton aufweisen, der unter Verwendung eines hydraulischen Bindemittelsystems nach dem Stand der Technik, wie z.B. Zement oder Rho-Tonerde, hergestellt wurde.

Feuerfester Beton, der unter Verwendung des erfindungsgemäßen, hydraulischen Bindemittelsystems hergestellt wird, kann auch ein besseres Trocknungsverhalten und eine bessere Korrosions- und Infiltrationsbeständigkeit im Vergleich zu feuerfestem Beton aufweisen, der unter Verwendung eines hydraulischen Bindemittelsystems nach dem Stand der Technik, wie z.B. Zement oder Rho-Tonerde, hergestellt wurde.

Soweit nicht explizit anders angegeben, handelt es sich bei den angeführten Korngrößen um mittlere Korngrößen D₅₀. Für den angegebenen Wert gilt, dass 50 % aller Partikel größer und 50 % aller Partikel kleiner sind. Die Bestimmung der Korngrößen erfolgt vorzugsweise mittels Lasergranulometrie nach ISO 13320.

Die Bestimmung der spezifischen Oberfläche erfolgte über Stickstoffadsorption (BET) gemäß DIN ISO 9277.

### Kalziniertes Aluminiumoxid A

Das erfindungsgemäße hydraulische Bindemittelsystem enthält 90,0 bis 99,99 Gew.-%, bevorzugt 95,0 bis 99,9 Gew.-%, bevorzugt 96,0 bis 99,8 Gew.-%, bevorzugt 97,0 bis 99,7 Gew.-%, bevorzugt 98,0 bis 99,5 Gew.-% mindestens eines kalzinierten Aluminiumoxids A. Dabei weist das mindestens eine kalzinierte Aluminiumoxid A eine mittlere Korngröße von 0,3 bis 25,0 µm und eine spezifische BET-Oberfläche von 0,5 bis 30,0 m²/g auf. Das erfindungsgemäße hydraulische Bindemittelsystem kann somit genau ein, zwei, drei, vier oder mehr kalzinierte Aluminiumoxide A mit den oben angegebenen Eigenschaften besitzen.

Das mindestens eine kalzinierte Aluminiumoxid A kann durch dem Fachmann geläufige Verfahren erhalten werden. Beispielsweise kann das mindestens eine kalzinierte Aluminiumoxid A aus handelsüblichem, in einem Bayer-Prozess hergestellten Aluminiumhydroxid durch thermische Behandlung (Kalzinierung) und anschließendes Vermahlen gewonnen werden.

Das Kalzinieren kann unter anderem bei Temperaturen von 1200 bis 1800 °C in einem Aluminiumoxidtiegel oder einem gasbeheizten Drehofen erfolgen. Das anschließende Vermahlen ist beispielsweise in einer Planetenkugelmühle durchführbar, kann aber auch in jeder anderen industriellen Mühle, wie beispielsweise Nass- und Trockenkugelmühlen, Rührwerks- und Attritormühlen, Ringspaltmühlen oder Strahlmühlen erfolgen.

Bevorzugt ist das mindestens eine kalzinierte Aluminiumoxid A in dem erfindungsgemäßen hydraulischen Bindemittelsystem
a) mindestens ein kalziniertes Aluminiumoxid A1 mit einer mittleren Korngröße von 1,8 bis 8,0 µm, bevorzugt 1,9 bis 6,5 µm, besonders bevorzugt 2,0 bis 4,5 µm, und einer spezifischen BET-Oberfläche von 0,5 bis 2,0 m²/g, bevorzugt 0,75 bis 1,5 m²/g; oder
b) mindestens ein kalziniertes Aluminiumoxid A2 mit einer mittleren Korngröße von 0,3 bis 1,7 µm, bevorzugt 0,5 bis 1,5 µm, bevorzugt 0,6 bis 1,2 µm, und einer spezifischen BET-Oberfläche von 2,0 bis 10,0 m²/g, bevorzugt 4,0 bis 8,0 m²/g.

In einer bevorzugten Ausführungsform betrifft die Erfindung ein hydraulisches Bindemittelsystem, enthaltend mindestens zwei verschiedene kalzinierte Aluminiumoxide A. Ebenso kann es sich um genau zwei verschiedene kalzinierte Aluminiumoxide A handeln.

Insbesondere handelt es sich hierbei um die oben beschriebenen Aluminiumoxide A1 und A2. Dementsprechend enthält das hydraulische Bindemittelsystem bevorzugt
a) mindestens ein kalziniertes Aluminiumoxid A1 mit einer mittleren Korngröße von 1,8 bis 8,0 µm, bevorzugt 1,9 bis 6,5 µm, besonders bevorzugt 2,0 bis 4,5 µm, und einer spezifischen BET-Oberfläche von 0,5 bis 2,0 m²/g, bevorzugt 0,75 bis 1,5 m²/g; und
b) mindestens ein kalziniertes Aluminiumoxid A2 mit einer mittleren Korngröße von 0,3 bis 1,7 µm, bevorzugt 0,5 bis 1,5 µm, bevorzugt 0,6 bis 1,2 µm, und einer spezifischen BET-Oberfläche von 2,0 bis 10,0 m²/g, bevorzugt 4,0 bis 8,0 m²/g.

Bevorzugt liegt das Verhältnis der Gewichtsanteile der kalzinierten Aluminiumoxide A1 und A2 im hydraulische Bindemittelsystem im Bereich von 0,1 : 9 bis 9 : 0,1; bevorzugt 1 : 4 bis 4 : 1, bevorzugt 1 : 3 bis 3 : 1 und besonders bevorzugt 1 : 2 bis 2 : 1.

In einer weiteren bevorzugten Ausführungsform beträgt das Verhältnis der Gewichtsanteile der kalzinierten Aluminiumoxide A1 und A2 im hydraulischen Bindemittelsystem 1:1.

Das mindestens eine kalzinierte Aluminiumoxid A kann in beschichteter oder unbeschichteter Form vorliegen.

In einer bevorzugten Ausführungsform ist das mindestens eine kalzinierte Aluminiumoxid A beschichtet. Sind mehrere Aluminiumoxide vorhanden, können diese jeweils unabhängig voneinander unbeschichtet oder beschichtet sein. Darüber hinaus kann jedes Aluminiumoxid für sich sowohl beschichtet als auch unbeschichtet vorliegen. Sind beispielsweise zwei Aluminiumoxide, wie die oben bezeichneten Aluminiumoxide A1 und A2 vorhanden, so können beide beschichtet oder unbeschichtet sein. Weiterhin kann nur ein Aluminiumoxid beschichtet sein. Somit ist es möglich, dass A1 und A2 unbeschichtet sind. Es kann auch A1 beschichtet und A2 unbeschichtet sein. Weiterhin kann A1 unbeschichtet und A2 beschichtet sein. Schließlich können beide -A1 und A2- beschichtet sein. Sofern mehrere Aluminiumoxide vorliegen, sind diese vorzugsweise alle beschichtet oder unbeschichtet.

Geeignete Beschichtungsmittel sind beispielsweise Phosphorsäure und deren Salze, bevorzugt ist das Beschichtungsmittel Phosphorsäure. Durch die Beschichtung kann die Oberfläche des mindestens einen kalzinierten Aluminiumoxids A zusätzlich aktiviert werden.

Bevorzugt erfolgt die Beschichtung des mindestens einen kalzinierten Aluminiumoxids A durch Vermengen des Aluminiumoxids mit verdünnter Phosphorsäure, wobei die Phosphorsäure eine Konzentration von 0,1 bis 1,0 Gew.-%, bevorzugt 0,3 bis 0,8 Gew.-% aufweist, und anschließender Trocknung des Gemisches. Bevorzugt werden die Mengen des mindestens einen kalzinierten Aluminiumoxid und der verdünnten Phosphorsäure so gewählt, dass 0,0001 bis 0,003 g Phosphorsäure/g Aluminiumoxid A eingesetzt werden. Die Trocknung erfolgt bevorzugt bei einer Temperatur von 100 bis 150 °C.

In einer bevorzugten Ausführungsform enthält das erfindungsgemäße Bindemittelsystem mindestens ein beschichtetes Aluminiumoxid A, welches bevorzugt A1 oder A2 ist.

In einer weiteren bevorzugten Ausführungsform enthält das hydraulische Bindemittelsystem mindestens zwei beschichtete Aluminiumoxide A, wobei bevorzugt das eine A1 und das andere A2 sind.

Weiterhin bevorzugt enthält das hydraulische Bindemittelsystem beschichtetes und unbeschichtetes Aluminiumoxid A1 und beschichtetes und unbeschichtetes Aluminiumoxid A2.

Weiterhin bevorzugt enthält das hydraulische Bindemittelsystem beschichtetes oder unbeschichtetes Aluminiumoxid A1 und beschichtetes oder unbeschichtetes Aluminiumoxid A2.

Weiterhin bevorzugt enthält das hydraulische Bindemittelsystem beschichtetes und unbeschichtetes Aluminiumoxid A1 und beschichtetes oder unbeschichtetes Aluminiumoxid A2.

Weiterhin bevorzugt enthält das hydraulische Bindemittelsystem beschichtetes oder unbeschichtetes Aluminiumoxid A1 und beschichtetes und unbeschichtetes Aluminiumoxid A2.

In einer weiteren bevorzugten Ausführungsform enthält das hydraulische Bindemittelsystem zusätzlich zu den aufgeführten Kombinationen von beschichtetem/unbeschichtetem A1 und/oder A2 mindestens ein weiteres kalziniertes Aluminiumoxid A, wobei es sich bei dem mindestens einen weiteren Aluminiumoxid A um ein kalziniertes Aluminiumoxid A handelt, welches nicht A1 oder A2 ist, und welches beschichtet oder unbeschichtet ist.

### Komponente B

Das erfindungsgemäße hydraulische Bindemittelsystem enthält weiterhin 0,01 bis 10,0 Gew.-%, bevorzugt 0,05 bis 4,95 Gew.-%, bevorzugt 0,1 bis 3,9 Gew.-%, bevorzugt 0,15 bis 2,85 Gew.-%, besonders bevorzugt 0,3 bis 1,8 Gew.-% mindestens einer Komponente B, ausgewählt aus der Gruppe bestehend aus Magnesiumhydroxid, Calciumhydroxid, Strontiumhydroxid, Bariumhydroxid, sowie deren Hydrate, Magnesiumoxid, Calciumoxid, Strontiumoxid und Bariumoxid.

Wird als Komponente B ein Hydrat von Magnesiumhydroxid, Calciumhydroxid, Strontiumhydroxid oder Bariumhydroxid eingesetzt, beziehen sich die Angaben für die Gewichtsanteile der mindestens einen Komponente B in dem erfindungsgemäßen Bindemittelsystem jeweils auf die Gewichtsanteile des entsprechenden hydratfreien Hydroxids im Bindemittelsystem.

Bei der Komponente B handelt es sich um eine Komponente, welche das mindestens eine kalzinierte Aluminiumoxid A zu einer abbindenden Reaktion anregt oder zusammen mit dem mindestens einen kalzinierten Aluminiumoxid A und Wasser eine hydraulische Reaktion eingeht.

Bevorzugt ist die mindestens eine Komponente B ausgewählt aus der Gruppe bestehend aus Calciumhydroxid, Strontiumhydroxid, Bariumhydroxid, deren Hydrate und Magnesiumoxid.

Weiterhin bevorzugt ist die mindestens eine Komponente B ausgewählt aus der Gruppe bestehend aus Magnesiumoxid, Calciumhydroxid, Hydraten von Strontiumhydroxid und Hydraten von Bariumhydroxid. Bevorzugt handelt es sich bei den Hydraten von Strontiumhydroxid und Bariumhydroxid um Strontiumhydroxid-8-hydrat und Bariumhydroxid-8-hydrat.

Bevorzugt weist die Komponente B eine mittlere Korngröße von 1,0 bis 20,0 µm und eine spezifische BET-Oberfläche von 0,5 bis 50,0 m²/g, bevorzugt 0,5 bis 25,0 m²/g, auf.

In einer bevorzugten Ausführungsform handelt es sich bei der mindestens einen Komponente B um ein Magnesiumoxid. Bevorzugt weist das Magnesiumoxid eine mittlere Korngröße von 1,0 bis 10,0 µm, bevorzugt 1,5 bis 7,0 µm, bevorzugt 2,0 bis 5,0 µm, und eine spezifische BET-Oberfläche von 5,0 bis 20,0 m²/g, bevorzugt 10,0 bis 18,0 m²/g, bevorzugt 13,0 bis 17,0 m²/g auf.

In einer weiteren bevorzugten Ausführungsform handelt es sich bei der mindestens einen Komponente B um ein Calciumhydroxid oder dessen Hydrate, insbesondere bevorzugt um ein Calciumhydroxid. Bevorzugt weist das Calciumhydroxid eine mittlere Korngröße von 1,0 bis 10,0 µm, bevorzugt 1,5 bis 7,0 µm, bevorzugt 2,0 bis 5,0 µm und eine spezifische BET-Oberfläche von 5,0 bis 20,0 m²/g, bevorzugt 8,0 bis 18,0 m²/g, bevorzugt 11,0 bis 15,0 m²/g auf.

In einer weiteren bevorzugten Ausführungsform handelt es sich bei der mindestens einen Komponente B um ein Strontiumhydroxid oder dessen Hydrate, insbesondere bevorzugt um dessen Hydrate. Bevorzugt weist das Strontiumhydroxid oder dessen Hydrate eine mittlere Korngröße von 5,0 bis 20,0 µm, bevorzugt 9,0 bis 17,0 µm, bevorzugt 11,0 bis 15,0 µm und eine spezifische BET-Oberfläche von 1,0 bis 13,0 m²/g, bevorzugt 2,0 bis 10,0 m²/g, bevorzugt 3,0 bis 7,0 m²/g auf.

In einer weiteren bevorzugten Ausführungsform handelt es sich bei der mindestens einen Komponente B um ein Bariumhydroxid oder dessen Hydrate, insbesondere dessen Hydrate. Bevorzugt weist das Bariumhydroxid oder dessen Hydrate eine mittlere Korngröße von 5,0 bis 20,0 µm, bevorzugt 9,0 bis 17,0 µm, bevorzugt 11,0 bis 14,0 µm und eine spezifische BET-Oberfläche von 1,0 bis 15,0 m²/g, bevorzugt 2,0 bis 12,0 m²/g, bevorzugt 6,0 bis 10,0 m²/g auf.

### Verflüssiger C

Das erfindungsgemäße hydraulische Bindemittelsystem kann weiterhin 0,05 bis 4,95 Gew.-%, bevorzugt 0,1 bis 3,9 Gew.-%, bevorzugt 0,15 bis 2,85 Gew.-%, besonders bevorzugt 0,2 bis 1,7 Gew.-% mindestens eines Verflüssigers C enthalten.

Verflüssiger im Sinne der vorliegenden Erfindung sind Substanzen, welche zur Verbesserung der Verarbeitungseigenschaften des erfindungsgemäßen hydraulischen Bindemittelsystems dienen könnten. Derartige Substanzen weisen häufig oberflächenaktive oder den pH-Wert beeinflussende Eigenschaften auf.

Durch die Zugabe eines Verflüssigers kann die Verarbeitbarkeit bei gleichbleibendem Wassergehalt verbessert werden und/oder bei gleichbleibender Verarbeitbarkeit die eingesetzte Wassermenge reduziert werden, wodurch die Festigkeit des erhaltenen feuerfesten Materials erhöht wird.

Geeignete Verflüssiger C für das erfindungsgemäße hydraulische Bindemittelsystem sind dem Fachmann generell bekannt. Geeignete Verflüssiger sind unter anderem Ligninsulfonate, Ligninsulfonsäure; Naphthalinsulfonate, Melamin-Formaldehyd-Sulfate; Polycarbonsäuren, beispielsweise Polyacrylsäure-Homopolymere, Polymetacrylsäure-Homopolymere, Polyacrylsäure-Polymetacrylsäure-Copolymere oder Polyacrylsäure-Maleinsäure-Copolymere sowie deren Salze; Polyacrylsäureester; modifizierte Poylcarbonsäuren, beispielsweise Polycarbonsäureether (PCE) mit kurzen oder langen Seitenketten, beispielweise erhältlich als CASTAMENT FS 10 (BASF SE), CASTAMENT FS 20 (BASF SE), VISCOCRETE 225P (Sika Deutschland GmbH), Polyacrylsäureether; Styrol-Maleinsäure-Copolymere; Hydroxycarbonsäuren, beispielsweise Zitronensäure oder Weinsäure sowie deren Salze; Carbonsäuren, beispielsweise Oxalsäure, Ameisensäure oder Essigsäure sowie deren Salze. Weiterhin sind anorganische Säuren, beispielsweise Borsäure, Phosphorsäure, Amidosulfonsäure, Kieselsäuren sowie deren Salze; und Polysäuren, beispielsweise Silicate oder Polyphosphate geeignet. Selbstverständlich sind auch Mischungen aus zwei oder mehr der aufgeführten Verflüssiger C geeignet.

Besonders bevorzugt handelt es sich bei dem mindestens einen Verflüssiger C um Zitronensäure oder deren Salze. Bevorzugt handelt es sich um Alkalisalze der Zitronensäure, weiterhin bevorzugt um Trilithium- oder Trinatriumcitrat.

Insbesondere bevorzugt ist der mindestens eine Verflüssiger C Trinatriumcitrat.

In einer bevorzugten Ausführungsform enthält das erfindungsgemäße hydraulische Bindemittel nicht mehr als einen Verflüssiger C.

In einer weiteren bevorzugten Ausführungsform enthält das erfindungsgemäße Bindemittelsystem mehr als einen Verflüssiger C. Ist mehr als ein Verflüssiger C im erfindungsgemäßen Bindemittelsystem enthalten, liegt bevorzugt eine Kombination aus Zitronensäure oder deren Salze und einer modifierten Polycarbonsäure, bevorzugt einem Polycarbonsäureether (PCE), sowie gegebenenfalls weiterer Verflüssiger C vor.

In einer bevorzugten Ausführungsform der Erfindung besteht das hydraulische Bindemittelsystem nur aus den Komponenten A, B und C.

Das erfindungsgemäße hydraulische Bindemittelsystem kann neben einem Verflüssiger C weitere Additive enthalten. Bei diesen handelt es sich um gängige, dem Fachmann auf dem Gebiet der hydraulischen Bindemittel sowie Bindemittel-enthaltenden Massen geläufige Additive, beispielsweise Stabilisierer, Luftporenbildner, Erstarrungsbeschleuniger, Erhärtungsbeschleuniger, Verzögerer oder Dichtungsmittel.

In einer bevorzugten Ausführungsform liegt das erfindungsgemäße hydraulische Bindemittelsystem in, zumindest teilweiser, vorgemischter Form der darin enthaltenen Komponenten vor.

In diesem Zusammenhang bedeutet der Ausdruck "zumindest teilweise", dass entweder zumindest zwei, aber nicht alle der Komponenten des hydraulischen Bindemittelsystems in bereits vorgemischter Form bereitgestellt werden und/oder dass jeweils nur ein gewisser Gewichtsanteil der einzelnen Komponenten in bereits vorgemischter Form bereitgestellt wird.

Es ist aber auch möglich, das mindestens eine kalzinierte Aluminiumoxid A, die mindestens eine Komponente B, gegebenenfalls den mindestens einen Verflüssiger C sowie gegebenenfalls weitere Komponenten des hydraulischen Bindemittelsystems in getrennter Form bereitzustellen.

Besonders bevorzugt wird das Bindemittelsystem jedoch bereits als Gemisch bereitgestellt, enthaltend die gesamte Menge des mindestens einen kalzinierten Aluminiumoxids A, der mindestens einen Komponente B, gegebenenfalls des mindestens einen Verflüssigers C sowie gegebenenfalls weiterer Komponenten.

### Verfahren zur Herstellung des hydraulischen Bindemittelsystems

Weiterhin betrifft die Erfindung ein Verfahren zur Herstellung des erfindungsgemäßen hydraulischen Bindermittelsystems.

Dementsprechend wurde ein Verfahren zur Herstellung des erfindungsgemäßen hydraulischen Bindemittelsystems bereitgestellt, enthaltend den Schritt:
a) Vermischen von
   - 90,0 bis 99,99 Gew.-% mindestens eines kalzinierten Aluminiumoxids A mit einer mittleren Korngröße von 0,3 bis 25,0 µm und einer BET-Oberfläche von 0,5 bis 30,0 m²/g; mit
   - 0,01 bis 10,0 Gew.-% mindestens einer Komponente B, ausgewählt aus der Gruppe bestehend aus Magnesiumhydroxid, Calciumhydroxid, Strontiumhydroxid, Bariumhydroxid, sowie deren Hydrate, Magnesiumoxid, Calciumoxid, Strontiumoxid und Bariumoxid;
wobei die jeweiligen Gewichtsanteile auf die Gesamtmenge des hydraulischen Bindemittelsystems bezogen sind.

In Bezug auf das Verfahren zur Herstellung des hydraulischen Bindemittelsystems gelten die bevorzugten Ausführungsformen, welche oben im Zusammenhang mit dem erfindungsgemäßen hydraulischen Bindemittelsystem genannt wurden.

In einer bevorzugten Ausführungsform werden während oder nach Schritt a) des Verfahrens 0,05 bis 4,95 Gew.-% mindestens eines Verflüssigers C zugegeben.

Das Vermischen des mindestens einen Aluminiumoxids A mit mindestens einer Komponente B und gegebenenfalls mindestens einem Verflüssiger C kann auf alle dem Fachmann bekannten Arten erfolgen, wobei die Komponenten A, B und gegebenenfalls C in jeder beliebigen Reihenfolge zugegeben werden können.

In einer bevorzugten Ausführungsform erfolgt das Vermischen des mindestens einen kalzinierten Aluminiumoxids A mit der mindestens einen Komponente B sowie gegebenenfalls mit mindestens einem Verflüssiger C in Schritt a) durch gemeinsames Vermahlen (Co-Vermahlen).

Durch das Co-Vermahlen des mindestens einen Aluminiumoxid A mit der mindestens einen Komponente B lässt sich die Abbindezeit des hydraulischen Bindemittelsystems verkürzen und seine Bindekraft positiv beeinflussen.

In einer Ausführungsform erfolgt die Zugabe des mindestens einen Verflüssigers C während Schritt a).

In einer weiteren Ausführungsform erfolgt die Zugabe des mindestens einen Verflüssigers C nach Schritt a).

Das Vermahlen des mindestens einen Aluminiumoxids A mit der mindestens einen Komponente B und gegebenenfalls mit mindestens einem Verflüssiger C kann auf alle dem Fachmann bekannten Arten erfolgen, beispielsweise in Planetenkugelmühlen und anderen industriellen Mühlen, wie beispielsweise Trockenkugelmühlen, Rührwerks- und Attritormühlen, Ringspaltmühlen oder Strahlmühlen. Dabei kann die Zugabe der einzelnen Komponenten A, B und gegebenenfalls C in jeder beliebigen Reihenfolge erfolgen.

Bevorzugt erfolgt die Vermahlung wasserfrei.

### Verwendung des hydraulischen Bindemittelsystems

Das erfindungsgemäße hydraulische Bindemittelsystem eignet sich besonders zur Herstellung von feuerfesten Materialien und feinkeramischen Werkstoffen.

Bevorzugt wird das hydraulische Bindemittelsystem zur Herstellung von feuerfesten Materialien verwendet. Bei diesen kann es sich beispielsweise um Stampfmassen, Vibrationsbetone oder selbstfließende Betone handeln.

Dabei enthalten die feuerfesten Materialien zwischen 5 und 70 Gew.-%, bevorzugt 15 bis 50 Gew.-%, besonders bevorzugt 20 bis 40 Gew.-% des erfindungsgemäßen hydraulischen Bindemittelsystems, bezogen auf die Summe aller Komponenten in den feuerfesten Materialien.

Das erfindungsgemäße hydraulische Bindemittelsystem eignet sich auch zur Herstellung von gegebenenfalls feuerfesten keramischen Gegenständen aus feinkörnigem Aluminiumoxid beziehungsweise gegebenenfalls feuerfesten feinkeramischen Werkstoffen mit Aluminiumoxid-Anteilen, wobei die Formgebung durch Schlickerguss oder Spritzguss besonders geeignet ist.

Dabei können die keramischen Gegenstände oder feinkeramischen Werkstoffe auch nur aus dem hydraulischen Bindemittesystem bestehen.

Bevorzugt sind die keramischen Gegenstände oder feinkeramischen Werkstoffe feuerfest.

Die Herstellung der feuerfesten Materialien kann durch alle dem Fachmann geläufige Verfahren erfolgen.

Beispielsweise können zunächst die Grobbestandteile der feuerfesten Masse mit Wasser angerührt werden und anschließend das erfindungsgemäße hydraulische Bindemittel in vorgemischter Form zugesetzt werden. Weiterhin kann aus dem hydraulischen Bindemittelsystem in vorgemischter Form und Wasser zunächst eine homogene Masse hergestellt werden, welche anschließend mit den jeweiligen Grobbestandteilen vermengt wird.

Es ist auch möglich, die Komponenten A, B, gegebenenfalls C sowie gegebenenfalls weitere Komponenten des hydraulischen Bindemittelsystems einzeln zu den Grobbestandteilen der feuerfesten Masse zuzugeben.

Beispielsweise kann zunächst Wasser gegebenenfalls mit mindestens einem Verflüssiger C vermengt werden und anschließend zu einem Gemisch aus den Komponenten A und B sowie den Grobbestandteilen gegeben werden. Die Komponenten A, B und die Grobbestandteile werden dabei bevorzugt vor der Zugabe des Wasser, gegebenenfalls enthaltend mindestens einen Verflüssiger C miteinander trocken vorgemischt.

Weiterhin ist es möglich, zunächst mindestens ein kalziniertes Aluminiumoxid A und gegebenenfalls mindestens einen Verflüssiger C mit Wasser zu vermengen, diese Mischung zu den Grobbestandteilen zu geben und anschließen mindestens eine Komponente B hinzuzufügen.

Bevorzugt werden die einzelnen Komponenten des hydraulischen Bindemittelsystems jedoch in einer bereits vorgemischten Form, enthaltend die gesamte Menge des mindestens einen kalzinierten Aluminiumoxids A, der mindestens einen Komponente B, gegebenenfalls des mindesten einen Verflüssigers C sowie gegebenenfalls weiterer Komponenten, eingesetzt.

Die Abbindezeit der feuerfesten Massen kann durch die Wahl der jeweiligen Komponenten A, B und gegebenenfalls C gesteuert werden. Dadurch können Abbindezeiten in einem Bereich von 1 Minute bis zu 20 Stunden erzielt werden.

Die folgenden Beispiele sollen die Erfindung näher illustrieren.

Soweit nicht explizit anders angegeben, handelt es sich bei den angeführten Korngrößen um mittlere Korngrößen D₅₀. Für den angegebenen Wert gilt, dass 50 % aller Partikel größer und 50 % aller Partikel kleiner sind. Die Bestimmung der Korngrößen erfolgte mittels Lasergranulometrie nach ISO 13320.

Die Bestimmung der spezifischen Oberfläche erfolgte über Stickstoffadsorption (BET) gemäß DIN ISO 9277.

Die Abbindezeit wurde gemäß EN 196 bestimmt (Vicat-Test), die Bestimmung der Kaltdruckfestigkeit erfolgte gemäß EN 1402.

### A) Herstellung der Ausgangsstoffe

Die Herstellung der Ausgangsstoffe AO1 bis AO3 erfolgte aus handelsüblichem Bayer-Prozess-Aluminiumhydroxid mit einer mittleren Korngröße von 80 µm und einer technischen Reinheit von Al(OH)₃ > 99 % (beispielsweise erhältlich von der Firma Aluminiumoxid Stade, Stade.

### 1. Herstellung von Aluminiumoxid AO1

### Kalzinierung:

Die thermische Behandlung des Aluminiumhydroxids erfolgte in einem elektrisch beheizten Ofen der Firma Nabertherm, wobei als Kalzinationsgefäß ein Aluminiumoxidtiegel mit einem Volumen von ca. 2 L eingesetzt wurde. Die Kalzinierung wurde für vier Stunden bei einer Temperatur von 1300 °C durchgeführt

### Mahlung:

Die Mahlung des Kalzinierungsprodukts erfolgte in einer Planetenkugelmühle PM 100 der Firma Retsch. Dabei wurden 60 g Kalzinat mit 200 g Aluminiumoxidmahlkugeln (Durchmesser 0,5 - 1 cm) für 20 Minuten vermahlen.

Das resultierende Aluminiumoxid wies eine spezifische BET-Oberfläche von 7,0 m²/g und einer mittleren Korngröße von 0,8 µm auf. Die Reinheit lag bei 99,6 % Al₂O₃. Der α-Korundgehalt lag bei > 90 %.

### 2. Herstellung von Aluminiumoxid A02

### Kalzinierung:

Die thermische Behandlung des Aluminiumhydroxids erfolgte in einem elektrisch beheizten Ofen der Firma Nabertherm, wobei als Kalzinationsgefäß ein Aluminiumoxidtiegel mit einem Volumen von ca. 2 L eingesetzt wurde. Die Kalzinierung wurde für vier Stunden bei einer Kalzinationstemperatur von 1650 °C durchgeführt.

### Mahlung:

Die Mahlung des Kalzinierungsprodukts erfolgte in einer Planetenkugelmühle PM 100 der Firma Retsch. Dabei wurden 60 g Kalzinat mit 200 g Aluminiumoxidmahlkugeln (Durchmesser 0,5 - 1 cm) für fünf Minuten vermahlen.

Das resultierende Aluminiumoxid wies eine spezifische BET-Oberfläche von 1,0 m²/g und einer mittleren Korngröße von 4,0 µm auf. Die Reinheit lag bei 99,6 % Al₂O₃. Der α-Korundgehalt lag bei > 90 %.

### 3. Herstellung von Aluminiumoxid A03

### Kalzinierung:

Die thermische Behandlung des Aluminiumhydroxids erfolgte in einem elektrisch beheizten Ofen der Firma Nabertherm, wobei als Kalzinationsgefäß ein Aluminiumoxidtiegel mit einem Volumen von ca. 2 L eingesetzt wurde. Die Kalzinierung wurde für vier Stunden bei einer Kalzinationstemperatur von 1650 °C durchgeführt.

### Mahlung:

Die Mahlung des Kalzinierungsprodukts erfolgte in einer Planetenkugelmühle PM 100 der Firma Retsch. Dabei wurden 60 g Kalzinat mit 200 g Aluminiumoxidmahlkugeln (Durchmesser 0,5 - 1 cm) für zehn Minuten vermahlen.

Das resultierende Aluminiumoxid wies eine spezifische BET-Oberfläche von 1,7 m²/g und einer mittleren Korngröße von 2,0 µm auf. Die Reinheit lag bei 99,6 % Al₂O₃. Der α-Korundgehalt lag bei > 90 %.

### B) Anwendungsbeispiele

### Beispiel 1: Abbindeverhalten einer feinkörnigen Grundmasse aus kalzinierten Tonerden

**Tabelle 1: Zusammensetzung der feinkörnigen Grundmasse**

| Zusammensetzung Grundmasse [Gew.-%] | Bestandteile |
|---|---|
| 84,30 | Bindemittelsystem gemäß Tabelle 2 |
| 15,70 | Anmachwasser |

**Tabelle 2: Zusammensetzung des hydraulischen Bindemittelsystems**

| Zusammensetzung Bindemittel [Gew.-%] | Bestandteile | | Korngröße D₅₀ | spezifische Oberfläche BET [m²/g] |
|---|---|---|---|---|
| 99,64 | A | AO1 | 0,8 µm | 7,0 |
| 0,28 | B | Magnesiumoxid¹ | 3,0 µm | 16,3 |
| 0,07 | C | Verflüssigungssystem² | 0,8 µm | 7,0 |

| | | | | |
|---|---|---|---|---|
| ¹ kaustisch gebrannt, Firma Nedmag, Niederlande ² Verflüssigungssystem (72% Citronensäure, 28% Essigsäure; beides Reagenzqualität Merck) | | | | |

### Versuchsdurchführung

Die kalzinierte Tonerde wurde unter Zugabe von Magnesiumoxid, Verflüssigungssystem und Wasser durch intensives Mischen verschlickert. Die fertige Mischung wurde in Kunststoffformen abgegossen und in einem abgeschlossenen Behälter 27 Stunden bei Raumtemperatur ausgelagert. Die Abbindezeit der Mischung wurde mit Hilfe des Vicat-Tests ermittelt. An den abgebundenen und ausgeformten Prüfkörpern (46x46mm) wurden Rohdichte (aus dem Gewicht und Volumen des Prüfkörpers) und Kaltdruckfestigkeit ermittelt. Die erzielten Ergebnisse sind in Tabelle 3 zusammengestellt

**Tabelle 3: Abbindeverhalten der feinkörnigen Grundmasse mit Magnesiumoxid**

| Abbindezeit [min] | Rohdichte [g/cm³] | Kaltdruckfestigkeit [N/mm²] |
|---|---|---|
| 120 | 2,19 | 2,0 |

Die ausgeformten Probekörper wurden bei 1625 °C für 3 Stunden gebrannt. Tabelle 4 zeigt die Eigenschaften der gesinterten Aluminiumoxidkeramik auf:

**Tabelle 4: Eigenschaften der gesinterten Aluminiumoxidkeramik**

| Trockenschwindung (110°C) | Sinterschwindung (1625°C) | Sinterdichte (1625°C) |
|---|---|---|
| 1,46 % | 14,95 % | 3,57g/cm³ |

### Beispiel 2: Einfluss der Magnesiumoxid-Menge auf die Abbindung eines Korundbetons

**Tabelle 5: Zusammensetzung des selbstfließenden Korundbetons**

| Zusammensetzung Beton [Gew.-%] | Bestandteile | Korngröße D₅₀ |
|---|---|---|
| 39,0 | Sinterkorund T60¹ | 1 - 3 mm |
| 7,8 | Sinterkorund T60¹ | 0,5-1 mm |
| 15,0 | Sinterkorund T60¹ | < 0,5 |
| 8,86 | Sinterkorund T60¹ | < 45 µm |
| 23,45 | Bindemittelsystem gemäß Tabelle 6 | - |
| 5,63 - 5,65 | Anmachwasser | - |

| | | |
|---|---|---|
| Firma Almatis GmbH, Deutschland | | |

**Tabelle 6: Zusammensetzung des hydraulischen Bindemittelsystems**

| Zusammensetzung Bindemittel [Gew.-%] | Bestandteile | | Korngröße D₅₀ | spezifische Oberfläche BET [m²/g] |
|---|---|---|---|---|
| 9,08 | A | AO1 | 0,8 µm | 7,0 |
| 90,26 - 88,70 | A | AO2 | 4,0 µm | 1,0 |
| 0,08 - 2,00 | B | Magnesiumoxid² | 3,0 µm | 16,3 |
| 0,21 | C | Verflüssigungssystem³ | 0,8 µm | 7,0 |

| | | | | |
|---|---|---|---|---|
| ² kaustisch gebrannt, Firma Nedmag, Niederlande ³ Trinatriumcitrat, Reagenzqualität | | | | |

### Versuchsdurchführung

Aus den kalzinierten Tonerden wurde zunächst unter Zugabe von Verflüssigungssystem und Anmachwasser durch intensives Mischen ein homogener Schlicker hergestellt. Dieser wurde anschließend mit der Sinterkorund-Körnung gemischt. Anschließend erfolgte die Zugabe des Magnesiumoxids. Die fertige Betonmischung wurde in Kunststoffformen abgegossen und in einem abgeschlossenen Behälter 27 Stunden bei Raumtemperatur ausgelagert. Die Abbindezeit der Mischung wurde mit Hilfe des Vicat-Tests ermittelt. An den abgebundenen und ausgeformten Prüfkörpern (46x46mm) wurde die Kaltdruckfestigkeit ermittelt. Die Ergebnisse sind Tabelle 7 zu entnehmen.

**Tabelle 7: Einfluss der Magnesiumoxid-Menge auf die Abbindung eines Korundbetons**

| Magnesiumoxid in Beton / in Bindemittel [Gew.-%] | Abbindezeit [min] | Kaltdruckfestigkeit [N/mm²] |
|---|---|---|
| 0,02 / 0,08 | 5500 | 1,0 |
| 0,06 / 0,26 | 1500 | 5,8 |
| 0,24 / 1,02 | 960 | 7,3 |
| 0,35 / 1,49 | 490 | 6,4 |
| 0,47 / 2,00 | 210 | 7,7 |

Es konnte gezeigt werden, dass bereits die Zugabe einer geringen Menge Magnesiumoxid eine Abbindung des Korundbetons bewirkte. Weiterhin konnte gezeigt werden, dass die Abbindezeit und die Kaltdruckfestigkeit der abgebunden Prüfkörper durch die Zusatzmenge eingestellt werden können.

### Beispiel 3: Einfluss der BET-Oberfläche von Magnesiumoxid auf die Abbindung eines Korundbetons

**Tabelle 8: Zusammensetzung der selbstfließenden Korundbetone**

| Zusammensetzung Beton [Gew.-%] | Bestandteile | Korngröße D₅₀ |
|---|---|---|
| 38,9 | Sinterkorund T60¹ | 1,0 -3,0 mm |
| 7,9 | Sinterkorund T60¹ | 0,5 - 1,0 mm |
| 14,9 | Sinterkorund T60¹ | < 0,5 mm |
| 8,9 | Sinterkorund T60¹ | < 45 µm |
| 23,8 | Bindemittelsystem gemäß Tabelle 9 | - |
| 5,6 | Anmachwasser | - |

| | | |
|---|---|---|
| ¹ Firma Almatis GmbH, Deutschland | | |

**Tabelle 9: Zusammensetzung des hydraulischen Bindemittelsystems**

| Zusammensetzung Bindemittel [Gew.-%] | Bestandteile | | Korngröße D₅₀ | spezifische Oberfläche BET [m²/g] |
|---|---|---|---|---|
| 88,3 | A | AO2 | 4,0 µm | 1,0 |
| 10,1 | A | AO1 | 0,8 µm | 7,0 |
| 0,8 | B | Magnesiumoxid² | siehe Tabelle 6 | |
| 0,8 | C | Verflüssigungssystem³ | - | - |

| | | | | |
|---|---|---|---|---|
| ² kaustisch gebrannt, Firma Nedmag, Niederlande ³ 65 bis 87,5 Gew.-% Polycarbonsäureether (PCE), 12 bis 32,5 Gew.-% Zitronensäure, 0,1 bis 1,4 Gew.-% Amidosulfonsäure, 0,1 bis 1,4 Gew.-% Siliciumdioxid (beispielsweise 66,7 Gew.-% CASTAMENT FS 20 und 33,3 Gew.-% Castament FS 10, beides erhältlich bei BASF SE). | | | | |

Untersucht wurden Korundbetone mit unbehandeltem, bei 600 °C und bei 1000 °C getempertem Magnesiumoxid. Als Maßzahl für die Reaktivität wurde die spezifische Oberfläche mittels BET-Methode bestimmt.

**Tabelle 10: Parameter der untersuchten Magnesiumoxid-Spezies**

| Temper-Temperatur Magnesiumoxid | Korngrößen- Verteilung | | | spezifische Oberfläche BET [m²/g] |
|---|---|---|---|---|
| | D₉₀ [µm] | D₅₀ [µm] | D₁₀ [µm] | |
| nicht getempert | 11,0 | 3,0 | 0,7 | 16,3 |
| 600°C | 11,0 | 3,0 | 0,7 | 14,5 |
| 1000°C | 11,0 | 3,0 | 0,7 | 2,0 |

### Versuchsdurchführung

Aus Verflüssigungssystem und Anmachwasser wurde eine klare Lösung hergestellt. Die anderen Rezepturbestandteile wurden zunächst für eine Minute trocken vorgemischt, anschließend wurden 2/3 des Wasser-Verflüssiger-Gemisches hinzugegeben und für drei Minuten gemischt. Schließlich wurde der Rest des Wasser-Verflüssiger-Gemisches zugegeben und gemischt, bis die Masse fließfähig wurde (ca. 2 Minuten).

Die so zubereiteten Betonmischungen wurden in Kunststoffformen abgegossen und in einem abgeschlossenen Behälter 24 Stunden bei Raumtemperatur ausgelagert. Die Abbindezeit der Betonmischungen wurde mit Hilfe des Vicat-Tests ermittelt. Die Prüfkörper wurden bei 110 °C 24 Stunden lang getrocknet. An abgebundenen, getrockneten Prüfkörpern (46x46mm) wurden Rohdichte (aus dem Gewicht und Volumen des Prüfkörpers) und Kaltdruckfestigkeit ermittelt. Die Ergebnisse sind Tabelle 11 zu entnehmen.

**Tabelle 11: Einfluss der spezifischen Oberfläche von Magnesiumoxid auf die Abbindung eines Korundbetons**

| Temper-Temperatur | spezifische Oberfläche BET [m²/g] | Abbindezeit [min] | Rohdichte [g/cm³] | Kaltdruckfestigkeit [N/mm²] |
|---|---|---|---|---|
| nicht getempert | 16,3 | 960 | 3,00 | 7,3 |
| 600°C | 14,5 | 1560 | 3,03 | 8,3 |
| 1000°C | 2,0 | 2760 | 2,94 | 2,5 |

Es konnte gezeigt werden, dass die Abbindezeit des selbstfließenden Korundbetons durch die Erhöhung der BET-Oberfläche des Magnesiumoxids verkürzt wird.

### Beispiel 4: Einfluss verschiedener Erdalkalioxide/-hydroxide auf die Abbindung eines Korundbetons

### a) Magnesiumoxid

**Tabelle 12: Zusammensetzung der selbstfließenden Korundbetone**

| Zusammensetzung Beton [Gew.-%] | Bestandteile | Korngröße D₅₀ |
|---|---|---|
| 46,8 | Sinterkorund T60¹ | < 0,5 mm |
| 47,6 | Bindemittelsystem gemäß Tabelle 13 | - |
| 5,6 | Anmachwasser | - |

| | | |
|---|---|---|
| ¹ Firma Almatis GmbH, Deutschland | | |

**Tabelle 13: Zusammensetzung des hydraulischen Bindemittelsystems**

| Zusammensetzung Bindemittel [Gew.-%] | Bestandteile | | Korngröße D₅₀ | spezifische Oberfläche BET [m²/g] |
|---|---|---|---|---|
| 32,4 | A | AO1 | 0,8 µm | 7,0 |
| 66,0 | A | AO2 | 4,0 µm | 1,0 |
| 1,0 | B | Magnesiumoxid¹ | 3,0 µm | 16,3 |
| 0,6 | C | Verflüssigungs-system² | - | - |

| | | | | |
|---|---|---|---|---|
| ¹ Firma Nedmag, Niederlande ² 66,7 Gew.-% Polycarbonsäureether (PCE, beispielsweise erhältlich als Viscocrete 225P (Sika) und 33,3 Gew.-% Zitronensäure (Reagenzqualität, Merck KGaA) | | | | |

### b) Calciumhydroxid

**Tabelle 14: Zusammensetzung der selbstfließenden Korundbetone**

| Zusammensetzung Beton [Gew.-%] | Bestandteile | Korngröße D₅₀ |
|---|---|---|
| 46,8 | Sinterkorund T60¹ | < 0,5 mm |
| 47,6 | Bindemittelsystem gemäß Tabelle 15 | - |
| 5,6 | Anmachwasser | - |

| | | |
|---|---|---|
| ¹ Firma Almatis GmbH, Deutschland | | |

**Tabelle 15: Zusammensetzung des hydraulischen Bindemittelsystems**

| Zusammensetzung Bindemittel [Gew.-%] | Bestandteile | | Korngröße D₅₀ | spezifische Oberfläche BET [m²/g] |
|---|---|---|---|---|
| 32,4 | A | AO1 | 0,8 µm | 7,0 |
| 65,7 | A | AO2 | 4,0 µm | 1,0 |
| 1,3 | B | Calciumhydroxid¹ | 3,6 µm | 13,0 |
| 0,6 | C | Verflüssigungssystem² | - | - |

| | | | | |
|---|---|---|---|---|
| ¹ Reagenzqualität, Nekablanc Kalkfabrik Netstal AG, Schweiz ² 66,7 Gew.-% Polycarbonsäureether (PCE, beispielsweise erhältlich als Viscocrete 225P (Sika) und 33,3 Gew.-% Zitronensäure (Reagenzqualität, Merck KGaA) | | | | |

### c) Strontiumhydroxid

**Tabelle 16: Zusammensetzung der selbstfließenden Korundbetone**

| Zusammensetzung Beton [Gew.-%] | Bestandteile | Korngröße D₅₀ |
|---|---|---|
| 46,5 | Sinterkorund T60¹ | < 0,5 mm |
| 47,9 | Bindemittelsystem gemäß Tabelle 17 | - |
| 5,6 | Anmachwasser | - |

| | | |
|---|---|---|
| Firma Almatis GmbH, Deutschland | | |

**Tabelle 17: Zusammensetzung des hydraulischen Bindemittelsystems**

| Zusammensetzung Bindemittel [Gew.-%] | Bestandteile | | Korngröße D₅₀ | spezifische Oberfläche BET [m²/g] |
|---|---|---|---|---|
| 32,4 | A | AO1 | 0,8 µm | 7,0 |
| 65,8 | A | AO2 | 4,0 µm | 1,0 |
| 2,5* | B | Sr(OH)₂ x 8 H₂O¹ | 13,0 µm | 5,0 |
| 0,6 | C | Verflüssigungssystem² | - | - |

| | | | | |
|---|---|---|---|---|
| * entspricht 1,1 Gew.-% von Hydrat-freiem Sr(OH)₂ ¹ Reagenzqualität ² 66,7 Gew.-% Polycarbonsäureether (PCE, beispielsweise erhältlich als Viscocrete 225P (Sika) und 33,3 Gew.-% Zitronensäure (Reagenzqualität (Merck) | | | | |

### d) Bariumhydroxid

**Tabelle 18: Zusammensetzung der selbstfließenden Korundbetone**

| Zusammensetzung Beton [Gew.-%] | Bestandteile | Korngröße D₅₀ |
|---|---|---|
| 46,5 | Sinterkorund T60¹ | < 0,5 mm |
| 47,9 | Bindemittelsystem gemäß Tabelle 19 | - |
| 5,6 | Anmachwasser | - |

**Tabelle 19: Zusammensetzung des hydraulischen Bindemittelsystems**

| Zusammensetzung Bindemittel [Gew.-%] | Bestandteile | | Korngröße D₅₀ | spezifische Oberfläche BET [m²/g] |
|---|---|---|---|---|
| 32,4 | A | AO1 | 0,8 µm | 7,0 |
| 65,8 | A | AO2 | 4,0 µm | 1,0 |
| 2,1* | B | Ba(OH)₂ x 8 H₂O¹ | 12,0 µm | 8,0 |
| 0,6 | C | Verflüssigungssystem² | - | - |

| | | | | |
|---|---|---|---|---|
| * entspricht 1,1 Gew.-% von Hydrat-freiem Ba(OH)₂ ¹ Reagenzqualität ² 66,7 Gew.-% Polycarbonsäureether (PCE, beispielsweise erhältlich als Viscocrete 225P (Sika) und 33,3 Gew.-% Zitronensäure (Reagenzqualität, Merck KGaA) | | | | |

### Versuchsdurchführung

Aus den kalzinierten Tonerden wurde zunächst unter Zugabe von Verflüssigungssystem und Anmachwasser durch intensives Mischen ein homogener Schlicker hergestellt. Dieser wurde anschließend mit der Sinterkorund-Körnung gemischt. Anschließend erfolgte die Zugabe der Erdalkalikomponente. Zu Testzwecken wurde auch eine Mischung ohne Aktivator-Zusatz hergestellt. Die fertige Betonmischung wurde in Kunststoffformen abgegossen und in einem abgeschlossenen Behälter 24 Stunden bei Raumtemperatur ausgelagert. Die Abbindezeit der Mischung wurde mit Hilfe des Vicat-Tests ermittelt. An den abgebundenen und ausgeformten Prüfkörpern (46x46mm) wurden Rohdichte (aus dem Gewicht und Volumen des Prüfkörpers) und Kaltdruckfestigkeit ermittelt. Die erzielten Ergebnisse sind in Tabelle 20 zusammengefasst

**Tabelle 20: Einfluss unterschiedlicher Erdalkalioxide/Hydroxide auf das Abbindeverhalten von Korundbetonen**

| Oxid/Hydroxid | Zusatzmenge Beton [Gew.-%] | Löslichkeit in H₂O [g/l bei 20°C] | ABZ [min] | KDF [N/mm²] | RD [g/cm³] |
|---|---|---|---|---|---|
| MgO | 0,5 | 0,009 | 1440 | 2,8 | 3,17 |
| Ca(OH)₂ | 0,6 | 1,7 | 20 | 2,2 | 3,11 |
| Sr(OH)₂ x 8 H₂O | 1,1 | 20,0 | 210 | 1,6 | 3,12 |
| Ba(OH)₂ x 8 H₂O | 1,1 | 72,0 | 360 | 1,3 | 3,12 |

| | | | | | |
|---|---|---|---|---|---|
| ABZ = Abbindezeit, KDF = Kaltdruckfestigkeit, RD = Rohdichte | | | | | |

Es konnte gezeigt werden, dass ohne Zugabe eines Aktivators keine Abbindung des Korundbetons erfolgte, eine Abbindung aber bei Zugabe eines Aktivators in jedem Fall erfolgte. Dabei entwickelte Magnesiumoxid die höchste Bindekraft (höchste Druckfestigkeit). Mit steigender Löslichkeit der Oxide/Hydroxide ging eine Verringerung der Bindekraft und eine Verlängerung der Abbindezeit einher.

### Beispiel 5: Einfluss der Calciumhydroxid-Menge auf das Abbindeverhalten von Korundbeton

**Tabelle 21: Zusammensetzung der selbstfließenden Korundbetone**

| Zusammensetzung Beton [Gew.-%] | Bestandteile | Korngröße D₅₀ |
|---|---|---|
| 46,58 - 46,47 | Sinterkorund T60¹ | < 0,5 mm |
| 46,90 - 47,03 | Bindemittelsystem gemäß Tabelle 22 | - |
| 6,52-6,50 | Anmachwasser | - |

| | | |
|---|---|---|
| ¹ Firma Almatis GmbH, Deutschland | | |

**Tabelle 22: Zusammensetzung des hydraulischen Bindemittelsystems**

| Zusammensetzung Bindemittel [Gew.-%] | Bestandteile | | Korngröße D₅₀ | spezifische Oberfläche BET [m²/g] |
|---|---|---|---|---|
| 66,14 - 65,81 | A | AO3 | 2 µm | 1,7 |
| 33,16 - 33,00 | A | AO1 | 0,8 µm | 7,0 |
| 0,11 - 0,59 | B | Ca(OH)₂¹ | 3,6 µm | 13,0 |
| 0,60 - 0,59 | C | Verflüssigungssystem² | - | - |

| | | | | |
|---|---|---|---|---|
| ¹ Nekablanc Kalkfabrik Netstal AG, Schweiz ² 65 bis 87,5 Gew.-% Polycarbonsäureether (PCE), 12 bis 32,5 Gew.-% Zitronensäure, 0,1 bis 1,4 Gew.-% Amidosulfonsäure, 0,1 bis 1,4 Gew.-% Siliciumdioxid (beispielsweise 66,7 Gew.-% CASTAMENT FS 20 und 33,3 Gew.-% Castament FS 10, beides erhältlich bei BASF SE). | | | | |

### Versuchsdurchführung

Aus den kalzinierten Tonerden wurde zunächst unter Zugabe von Verflüssigungssystem und Anmachwasser durch intensives Mischen ein homogener Schlicker hergestellt. Dieser wurde anschließend mit der Sinterkorund-Körnung gemischt. Anschließend erfolgte die Zugabe des Ca(OH)₂-Aktivators. Die fertige Betonmischung wurde in Kunststoffformen abgegossen und in einem abgeschlossenen Behälter 24 Stunden bei Raumtemperatur ausgelagert. Die Abbindezeit der Mischung wurde mit Hilfe des Vicat-Tests ermittelt. An den abgebundenen und ausgeformten Prüfkörpern (46x46mm) wurden Rohdichte (aus dem Gewicht und Volumen des Prüfkörpers) und Kaltdruckfestigkeit ermittelt. Die Ergebnisse sind Tabelle 23 zu entnehmen.

**Tabelle 23: Einfluss der Ca(OH)₂-Zusatzmenge auf die Eigenschaften der Korundbetone**

| Ca(OH)₂-Zusatzmenge Beton [Gew.-%] | Abbindezeit [min] | Rohdichte [g/cm³] | Kaltdruckfestigkeit [N/mm²] |
|---|---|---|---|
| 0,05 | 1500 | 3,08 | 0,9 |
| 0,09 | 390 | 3,08 | 1,8 |
| 0,19 | 45 | 3,01 | 1,8 |
| 0,23 | 35 | 3,08 | 2,3 |
| 0,28 | 10 | 3,03 | 2,2 |

Es konnte gezeigt werden, dass bereits geringe Ca(OH)₂-Mengen die Verfestigung des Korundbetons bewirken. Die Abbindezeit und die Festigkeit der abgebunden Prüfkörper konnte durch die Zusatzmenge eingestellt werden.

### Beispiel 6: Einfluss der Beschichtung der kalzinierten Tonerden

**Tabelle 24: Zusammensetzung des selbstfließenden Korundbetons**

| Zusammensetzung Beton [Gew.-%] | Bestandteile | Korngröße D₅₀ |
|---|---|---|
| 46,8 | Sinterkorund T60¹ | < 0.5 mm |
| 47,6 | Bindemittelsystem gemäß Tabelle 25 | - |
| 5,6 | Anmachwasser | - |

| | | |
|---|---|---|
| Firma Almatis GmbH, Deutschland | | |

**Tabelle 25: Zusammensetzung des hydraulischen Bindemittelsystems**

| Zusammensetzung Bindemittel [Gew.-%] | Bestandteile | | Korngröße D₅₀ | spezifische Oberfläche BET [m²/g] |
|---|---|---|---|---|
| 32,4 | A | AO1, beschichtet¹ | 0,8 µm | 7.0 |
| 66,0 | A | AO2, beschichtet¹ | 4,0 µm | 1,0 |
| 1,0 | B | Magnesiumoxid² | 3,0 µm | 16,3 |
| 0,6 | C | Verflüssigungssystem³ | - | - |

| | | | | |
|---|---|---|---|---|
| ¹ Phosphorgehalt 0,063 Gew.-% ² kaustisch gebrannt, Firma Nedmag, Niederlande ³ 65 bis 87,5 Gew.-% Polycarbonsäureether, 12 bis 32,5 Gew.-% Zitronensäure, 0,1 bis 1,4 Gew.-% Amidosulfonsäure, 0,1 bis 1,4 Gew.-% Siliciumdioxid (beispielsweise 66,7 Gew.-% CASTAMENT FS 20 und 33,3 Gew.-% CASTAMENT FS 10, beides erhältlich bei BASF SE). | | | | |

### Versuchsdurchführung

Eine Mischung aus AO1 und AO2 im Gewichtsverhältnis von 16,5 : 33,5 wurde mit einer verdünnten technischen Phosphorsäure mit einer Konzentration von 0,74 % bei Raumtemperatur homogen gemischt. Die Menge an verdünnter H₃PO₄ wurde so gewählt, dass 0,002 g H₃PO₄/g Al₂O₃ eingesetzt wurden. Anschließend wurde die Mischung bei 110 °C getrocknet und zur Herstellung der Beton-Prüfkörper verwendet.

Aus der beschichteten kalzinierten Tonerde-Mischung wurde zuerst unter Zugabe von Verflüssigungssystem und Anmachwasser durch intensives Mischen ein homogener Schlicker hergestellt. Dieser wurde anschließend mit der Sinterkorund-Körnung gemischt. Anschließend erfolgte die Zugabe des Magnesiumoxids. Die fertige Betonmischung wurde in Kunststoffformen abgegossen und in einem abgeschlossenen Behälter 27 Stunden bei Raumtemperatur ausgelagert. Die Abbindezeit der Mischung wurde mit Hilfe des Vicat-Tests ermittelt. An den abgebundenen und ausgeformten Prüfkörpern (46x46mm) wurden Rohdichte (aus dem Gewicht und Volumen des Prüfkörpers) und Kaltdruckfestigkeit ermittelt. Zum Vergleich wurde ein Korundbeton aus den entsprechenden unbeschichteten Tonerden untersucht. Die erzielten Ergebnisse sind Tabelle 26 zu entnehmen.

**Tabelle 26: Einfluss der Phosphorsäure auf das Abbindeverhalten in einem Korundbeton**

| kalzinierte Aluminiumoxide | Kaltdruckfestigkeit [N/mm²] | Rohdichte [g/cm³] | Abbindezeit [min] |
|---|---|---|---|
| unbeschichtet | 3,6 | 3,10 | 70 |
| beschichtet* | 4,8 | 3,11 | 120 |

| | | | |
|---|---|---|---|
| * entspricht 0,068 Gew.-% P₂O₅ in Korundbeton | | | |

Es konnte gezeigt werden, dass die Verwendung von beschichteten kalzinierten Tonerden eine erhebliche Verbesserung der Bindekraft bewirkt. Dies äußerte sich durch die Steigerung der Kaltdruckfestigkeit der abgebundenen Betone um mehr als 30 %. Es konnte auch gezeigt werden, dass sich durch die Verwendung einer beschichteten Tonerde die Abbindezeit des Betons merklich verlängert.

### Beispiel 7: Charakterisierung des erfindungsgemäßen Bindemittelsystems im Hinblick auf die Anwendungseigenschaften daraus hergestellter Korundbetone

**Tabelle 27: Zusammensetzung des Korundbetons "Neues hydraulisches Bindemittel 1% MgO"**

| Zusammensetzung Beton [Gew.-%] | Bestandteile | Korngröße D₅₀ |
|---|---|---|
| 29,2 | Sinterkorund T60¹ | 1 - 3 mm |
| 21,37 | Sinterkorund T60¹ | 0,5-1 mm |
| 4,58 | Sinterkorund T60¹ | < 0,5 |
| 12,25 | Sinterkorund T60¹ | < 45 µm |
| 28,02 | Bindemittelsystem gemäß Tabelle 7.b | - |
| 4,58 | Anmachwasser | - |

| | | |
|---|---|---|
| ¹ Firma Almatis GmbH, Deutschland | | |

**Tabelle 28: Zusammensetzung des erfindungsgemäßen hydraulischen Bindemittelsystems**

| Zusammensetzung Bindemittel [Gew.-%] | Bestandteile | | Korngröße D₅₀ | spezifische Oberfläche BET [m²/g] |
|---|---|---|---|---|
| 32,6 | A | AO1 | 0,8 µm | 7,0 |
| 66,2 | A | AO2 | 4,0 µm | 1,0 |
| 1,0 | B | Magnesiumoxid² | 3,0 µm | 16,3 |
| 0,2 | C | Verflüssigungssystem³ | 0,8 µm | 7,0 |

| | | | | |
|---|---|---|---|---|
| ² kaustisch gebrannt, Firma Nedmag, Niederlande ³ 50 Gew.-% Trinatriumcitrat, Reagenzqualität, 50 Gew.-% Polycarbonsäureether (PCE, beispielsweise erhältlich als Viscocrete 225 P (Sika)) | | | | |

**Tabelle 29: Zusammensetzung des Korundbetons "Neues hydraulisches Bindemittel 3% MgO"**

| Zusammensetzung Beton [Gew.-%] | Bestandteile | Korngröße D₅₀ |
|---|---|---|
| 29,2 | Sinterkorund T60¹ | 1 - 3 mm |
| 21,37 | Sinterkorund T60¹ | 0,5-1 mm |
| 4,58 | Sinterkorund T60¹ | < 0,5 |
| 12,25 | Sinterkorund T60¹ | < 45 µm |
| 28,02 | Bindemittelsystem gemäß Tabelle 7.d | - |
| 4,58 | Anmachwasser | - |

| | | |
|---|---|---|
| ¹ Firma Almatis GmbH, Deutschland | | |

**Tabelle 30: Zusammensetzung des erfindungsgemäßen hydraulischen Bindemittelsystems**

| Zusammensetzung Bindemittel [Gew.-%] | Bestandteile | | Korngröße D₅₀ | spezifische Oberfläche BET [m²/g] |
|---|---|---|---|---|
| 31,83 | A | AO1 | 0,8 µm | 7,0 |
| 64,6 | A | AO2 | 4,0 µm | 1,0 |
| 3,33 | B | Magnesiumoxid² | 3,0 µm | 16,3 |
| 0,24 | C | Verflüssigungssystem³ | 0,8 µm | 7,0 |

| | | | | |
|---|---|---|---|---|
| ² kaustisch gebrannt, Firma Nedmag, Niederlande ³ 57 Gew.-% Trinatriumcitrat, Reagenzqualität, 43 Gew.-% Polycarbonsäureether (PCE, beispielsweise erhältlich als Viscocrete 225 P (Sika)) | | | | |

### Versuchsdurchführung

Alle Rezepturbestandteile außer Wasser wurden zunächst für eine Minute trocken vorgemischt, anschließend wurden 2/3 des Wassers hinzugegeben und für drei Minuten gemischt. Schließlich wurde der Rest des Wassers zugegeben und gemischt, bis die Masse fließfähig wurde (ca. 2 Minuten).

### Konsistenz und Abbindezeit:

An den so zubereiteten Vibrationsbetonen wurde die Konsistenz anhand des Ausbreitmaßes (DIN EN 1402-4) bestimmt. Nach der Bestimmung der Konsistenz wurde der Beton aufgenommen und in einem verschlossenen Plastikgefäß gelagert. Die Bestimmung der Konsistenz wurde alle 30 Minuten wiederholt, bis der Beton abgebunden war.

**Tabelle 31: Konsistenz und Abbindezeit der Korundbetone**

| Bezeichnung des Betons | Ausbreitmaß [%] | Abbindezeit [h] |
|---|---|---|
| Neues hydraulisches Bindemittel 1% MgO | 130 | 4,5 |
| Neues hydraulisches Bindemittel 3% MgO | 130 | 10 |

Wie sich aus Tabelle 31 ergibt, zeigen die Korundbetone praxisgerechte Verarbeitungseigenschaften, wenn diese unter Verwendung des erfindungsgemäßen, hydraulischen Bindemittelsystems hergestellt wurden.

### Trocknungsverhalten:

Jeweils 1 kg Frischbeton wurde in einen Kunststoffeimer gefüllt und für 24 h bei Raumtemperatur und unter Luftabschluss aushärten gelassen. Dann wurden die Eimer geöffnet und bei 110°C in einem Trockenschrank bis zur Gewichtskonstanz getrocknet. Dabei wurde die Masse der Betonproben regelmäßig bestimmt.

**Tabelle 32: Wasserzugabe, Gesamttrockenverlust und chemisch gebundenes Wasser der abgebundenen Korundbetone (Letzteres ermittelt aus der Differenz der ersten beiden.)**

| Bezeichnung des Betons | Wasserzugabe [%] | Gesamttrockenverlust [%] | chemisch gebundenes Wasser [%] |
|---|---|---|---|
| Neues hydraulisches Bindemittel 1% MgO | 4,58 | 4,25 | 0,33 |
| Neues hydraulisches Bindemittel 3% MgO | 4,58 | 3,99 | 0,59 |

Das erfindungsgemäße Bindemittelsystem bindet signifikant weniger Wasser in Hydraten, als Zement.

Das erfindungsgemäße, neue, hydraulische Bindemittelsystem führt zu einem Beton mit hoher Permeabilität des Gefüges. Die Trocknung war bereits nach 24 Stunden abgeschlossen. Diese Eigenschaft des erfindungsgemäßen Bindemittelsystems ermöglicht kurze Fertigungszyklen bei feuerfesten Betonfertigteilen, und schnelle Aufheizkurven bei monolithischen Feuerfestzustellungen.

### Dichte und Festigkeit:

Außerdem wurden die so zubereiteten Betonmischungen in Kunststoffformen abgegossen und in einem abgeschlossenen Behälter 24 Stunden bei Raumtemperatur ausgelagert. Die Prüfkörper wurden bei 110°C 24 Stunden lang getrocknet. Ein Teil der Prüfkörper wurde danach bei 1000°C bzw. 1500°C für drei Stunden gebrannt. An getrockneten und gebrannten Prüfkörpern (46x46mm) wurden Rohdichte (aus dem Gewicht und Volumen des Prüfkörpers), die Schwindung und Kaltdruckfestigkeit ermittelt.

**Tabelle 33; Kaltdruckfestigkeit, Rohdichte und Trockenschwindung der bei 110°C getrockneten Korundbetone**

| Bezeichnung des Betons | Kaltdruckfestigkeit [N/mm²] | Rohdichte [g/cm³] | Trockenschwindung [%] |
|---|---|---|---|
| Neues hydraulisches Bindemittel 1% MgO | 7 | 3,06 | 0,02 |
| Neues hydraulisches Bindemittel 3% MgO | 18 | 3,04 | 0,05 |

**Tabelle 34: Kaltdruckfestigkeit, Rohdichte und Trockenschwindung der bei 1000°C gebrannten Korundbetone**

| Bezeichnung des Betons | Kaltdruckfestigkeit [N/mm²] | Sinterdichtedichte [g/cm³] | Brennschwindung [%] |
|---|---|---|---|
| Neues hydraulisches Bindemittel 1% MgO | 16 | 3,06 | 0,04 |
| Neues hydraulisches Bindemittel 3% MgO | 23 | 3,04 | 0,05 |

**Tabelle 35: Kaltdruckfestigkeit, Rohdichte und Trockenschwindung der bei 1500°C gebrannten Korundbetone**

| Bezeichnung des Betons | Kaltdruckfestigkeit [N/mm²] | Sinterdichtedichte [g/cm³] | Brennschwindung [%] |
|---|---|---|---|
| Neues hydraulisches Bindemittel 1% MgO | 110 | 3,08 | 0,11 |
| Neues hydraulisches Bindemittel 3% MgO | 130 | 3,10 | 0,09 |

Die Rohdichte der Betone mit dem erfindungsgemäßen Bindemittelsystem liegt auf der Höhe anderer Korundbetone nach dem Stand der Technik. Die Trockenschwindung fällt minimal aus. Ein Wachsen, bedingt durch die Hydratation, wie es bei hohen Gehalten an Rho-Tonerde vorkommt, tritt bei dem erfindungsgemäßen Bindemittelsystem nicht auf. Die Festigkeit des Betons, der unter Verwendung des erfindungsgemäßen, hydraulischen Bindemittelsystems hergestellt wurde, liegt im niedrigen, praxisgerechten Bereich. Nach dem Brand bei 1000°C oder 1500°C ist die Festigkeit der Betone, die unter Verwendung des erfindungsgemäßen, hydraulischen Bindemittelsystems hergestellt wurden, vergleichbar mit der Festigkeit von Betonen die mit Bindemitteln nach dem Stand der Technik hergestellt wurden. Die geringe Brennschwindung wirkt sich positiv auf die Stabilität von feuerfesten Zustellungen aus, da durch eine zu hohe Brennschwindung Risse hervorgerufen werden können.

### Hochtemperaturfestigkeit:

Aus bei 1500°C gebrannten Probekörpern wurden mit einer Diamantsäge Prüfkuben mit einer Kantenlänge von 25 mm zur Bestimmung der Heißdruckfestigkeit präpariert. Die Heißdruckfestigkeit wurde bei 1450°C bestimmt.

**Tabelle 36: Heissdruckfestigkeit, gemessen bei 1450°C der bei 1500°C gebrannten Korundbetone**

| Bezeichnung des Betons | Heissdruckfestigkeit [N/mm²] |
|---|---|
| Neues hydraulisches Bindemittel 1% MgO | 31,3 |
| Neues hydraulisches Bindemittel 3% MgO | 59,2 |

Die Heißdruckfestigkeit aller Betone liegt auf sehr hohem Niveau.

### Korrosionsbeständigkeit:

Darüber hinaus wurden die so zubereiteten Betonmischungen in zylindrische Tiegelformen mit einem Durchmesser von 50 mm und einer Höhe von 65 mm gegossen. Die zylindrische Vertiefung der Tiegel besaß einen Durchmesser von 23mm und eine Tiefe von 35mm Die Tiegel wurden 24 h bei Raumtemperatur ausgehärtet, 24 h bei 110°C getrocknet und für 3 h bei 1500°C gebrannt. Danach wurden die Tiegel mit 17g Schlacke gefüllt und erneut bei 1500°C für 3 h ausgelagert. Im Anschluss wurden die Tiegel mit einer Diamantsäge durchschnitten und die Schnittflächen bewertet. Korrosionstiefe und Infiltrationstiefe der Schlacke in das Feuerfestmaterial wurden an 8 Stellen gemessen und der arithmetische Mittelwert gebildet.

**Tabelle 37: ChemischeAnalyse der verwendeten Schlacke:**

| Oxid | Gehalt [%] |
|---|---|
| Fe₂O₃ | 36 |
| CaO | 29 |
| SiO₂ | 20 |
| PO₄ | 6 |
| Al₂O₃ | 6 |
| Mn₂O₃ | 1,5 |
| MgO | 1,5 |

**Tabelle 38: Ergebnisse der Schlackentests**

| Bezeichnung des Betons | Korrosionstiefe | Infiltrationstiefe |
|---|---|---|
| Neues hydraulisches Bindemittel 1% MgO | < 0,1 mm | 4,2 mm |
| Neues hydraulisches Bindemittel 3% MgO | < 0,1 mm | 3,1 mm |

Die das erfindungsgemäße Bindemittelsystem enthaltenden Tiegel weisen eine gering ausgeprägte Reaktion mit der Schlacke auf, da diese Betone keinen Zement und somit kein Kalziumoxid enthalten. Das Volumen der Schlacke, ist fast vollständig im Tiegel verbleiben und nicht in das Feuerfestmaterial eingedrungen. Die Infiltrationstiefe ist sehr gering und eine Korrosion hat quasi nicht stattgefunden.

## Patentansprüche

1. Hydraulisches Bindemittelsystem zur Anwendung in feuerfesten Materialien, enthaltend
a) 90,0 bis 99,99 Gew.-% mindestens eines kalzinierten Aluminiumoxids A mit einer mittleren Korngröße von 0,3 bis 25,0 µm und einer BET-Oberfläche von 0,5 bis 30,0 m²/g; und
b) 0,01 bis 10,0 Gew.-% mindestens einer Komponente B, ausgewählt aus der Gruppe bestehend aus Magnesiumhydroxid, Calciumhydroxid, Strontiumhydroxid, Bariumhydroxid, sowie deren Hydrate, Magnesiumoxid, Calciumoxid, Strontiumoxid und Bariumoxid;
wobei die jeweiligen Gewichtsanteile auf die Gesamtmenge des hydraulischen Bindemittelsystems bezogen sind.

2. Bindemittel gemäß Anspruch 1, **dadurch gekennzeichnet, dass** zusätzlich 0,05 bis 4,95 Gew.-% mindestens eines Verflüssigers C enthalten sind.

3. Bindemittelsystem gemäß Anspruch 1 oder 2, **dadurch gekennzeichnet, dass** das mindestens eine kalzinierte Aluminiumoxid A
a) mindestens ein kalziniertes Aluminiumoxid A1 mit einer mittleren Korngröße von 1,8 bis 8,0 µm und einer spezifischen BET-Oberfläche von 0,5 bis 2,0 m²/g;
oder
b) mindestens ein kalziniertes Aluminiumoxid A2 mit einer mittleren Korngröße von 0,3 bis 1,7 µm und einer spezifischen BET-Oberfläche von 2,0 bis 10,0 m²/g ist,
oder dass
a) mindestens ein kalziniertes Aluminiumoxid Al mit einer mittleren Korngröße von 1,8 bis 8,0 µm und einer spezifischen BET-Oberfläche von 0,5 bis 2,0 m²/g;
und
b) mindestens ein kalziniertes Aluminiumoxid A2 mit einer mittleren Korngröße von 0,3 bis 1,7 µm und einer spezifischen BET-Oberfläche von 2,0 bis 10,0 m²/g
enthalten sind.

4. Bindemittelsystem gemäß einem der Ansprüche 1 bis 3, **dadurch gekennzeichnet, dass** mindestens zwei verschiedene kalzinierte Aluminiumoxide A enthalten sind.

5. Bindemittelsystem gemäß einem der der Ansprüche 1 bis 4, **dadurch gekennzeichnet, dass** mindestens ein Aluminiumoxid A beschichtet ist.

6. Bindemittelsystem gemäß einem der Ansprüche 1 bis 5, **dadurch gekennzeichnet, dass** mindestens ein Aluminiumoxid A beschichtet ist, wobei das Beschichtungsmittel Phosphorsäure ist.

7. Bindemittelsystem gemäß einem der Ansprüche 1 bis 6, **dadurch gekennzeichnet, dass** die Komponente B eine mittlere Korngröße von 1,0 bis 20,0 um und eine BET-Oberfläche von 0,5 bis 50,0 m²/g aufweist.

8. Bindemittelsystem gemäß einem der Ansprüche 1 bis 7, **dadurch gekennzeichnet**, das die mindestens eine Komponente B ein Magnesiumoxid ist.

9. Bindemittelsystem gemäß einem der Ansprüche 1 bis 7, **dadurch gekennzeichnet**, das die mindestens eine Komponente B ein Calciumhydroxid ist.

10. Bindemittelsystem gemäß einem der Ansprüche 1 bis 7, **dadurch gekennzeichnet**, das die mindestens eine Komponente B ein Strontiumhydroxid oder dessen Hydrate ist.

11. Bindemittelsystem gemäß einem der Ansprüche 1 bis 7, **dadurch gekennzeichnet**, das die mindestens eine Komponente B ein Bariumhydroxid oder dessen Hydrate ist.

12. Bindemittelsystem gemäß einem der Ansprüche 2 bis 11, **dadurch gekennzeichnet, dass** der mindestens eine Verflüssiger C Trinatriumcitrat ist.

13. Verfahren zur Herstellung eines hydraulischen Bindemittelsystems gemäß einem der Ansprüche 1 bis 12 enthaltend den Schritt:
a) Vermischen von
- 90,0 bis 99,99 Gew.-% mindestens eines kalzinierten Aluminiumoxids A mit einer mittleren Korngröße von 0,3 bis 25,0 µm und einer BET-Oberfläche von 0,5 bis 30,0 m²/g; mit
- 0,01 bis 10,0 Gew.-% mindestens einer Komponente B, ausgewählt aus der Gruppe bestehend aus Magnesiumhydroxid, Calciumhydroxid, Strontiumhydroxid, Bariumhydroxid, sowie deren Hydrate, Magnesiumoxid, Calciumoxid, Strontiumoxid und Bariumoxid;
wobei die jeweiligen Gewichtsanteile auf die Gesamtmenge des hydraulischen Bindemittelsystems bezogen sind.

14. Verfahren gemäß Anspruch 13 **dadurch gekennzeichnet, dass** während oder nach Schritt a) 0,05 bis 4,95 Gew.-% mindestens eines Verflüssigers C zugegeben werden.

15. Verfahren gemäß Anspruch 13 oder 14, **dadurch gekennzeichnet, dass** das Vermischen des mindestens einen kalzinierten Aluminiumoxids A mit der mindestens einen Komponente B und gegebenenfalls mindestens einem Verflüssiger C in Schritt a) durch gemeinsames Vermahlen erfolgt.

16. Verwendung eines hydraulischen Bindemittelsystems gemäß einem der Ansprüche 1 bis 12 in feuerfesten Materialien und feinkeramischen Werkstoffen.

## Claims

1. Hydraulic binder system for use in refractory materials, comprising
a) from 90.0 to 99.99% by weight of at least one calcined aluminum oxide A having an average particle size of from 0.3 to 25.0 µm and a BET surface area of from 0.5 to 30.0 m²/g; and
b) from 0.01 to 10.0% by weight of at least one component B selected from the group consisting of magnesium hydroxide, calcium hydroxide, strontium hydroxide, barium hydroxide and hydrates thereof, magnesium oxide, calcium oxide, strontium oxide and barium oxide;
where the respective proportions by weight are based on the total amount of the hydraulic binder system.

2. Binder according to Claim 1, **characterized in that** from 0.05 to 4.95% by weight of at least one plasticizer C are additionally present.

3. Binder system according to Claim 1 or 2, **characterized in that** the at least one calcined aluminum oxide A is
a) at least one calcined aluminum oxide A1 having an average particle size of from 1.8 to 8.0 µm and a specific BET surface area of from 0.5 to 2.0 m²/g;
or
b) at least one calcined aluminum oxide A2 having an average particle size of from 0.3 to 1.7 µm and a specific BET surface area of from 2.0 to 10.0 m²/g,
or **in that**
a) at least one calcined aluminum oxide A1 having an average particle size of from 1.8 to 8.0 µm and a specific BET surface area of from 0.5 to 2.0 m²/g;
and
b) at least one calcined aluminum oxide A2 having an average particle size of from 0.3 to 1.7 µm and a specific BET surface area of from 2.0 to 10.0 m²/g
are present.

4. Binder system according to any of Claims 1 to 3, **characterized in that** at least two different calcined aluminum oxides A are present.

5. Binder system according to any of Claims 1 to 4, **characterized in that** at least one aluminum oxide A is coated.

6. Binder system according to any of Claims 1 to 5, **characterized in that** at least one aluminum oxide A is coated, with the coating agent being phosphoric acid.

7. Binder system according to any of Claims 1 to 6, **characterized in that** the component B has an average particle size of from 1.0 to 20.0 µm and a BET surface area of from 0.5 to 50.0 m²/g.

8. Binder system according to any of Claims 1 to 7, **characterized in that** the at least one component B is a magnesium oxide.

9. Binder system according to any of Claims 1 to 7, **characterized in that** the at least one component B is a calcium hydroxide.

10. Binder system according to any of Claims 1 to 7, **characterized in that** the at least one component B is a strontium hydroxide or hydrate thereof.

11. Binder system according to any of Claims 1 to 7, **characterized in that** the at least one component B is a barium hydroxide or hydrate thereof.

12. Binder system according to any of Claims 2 to 11, **characterized in that** the at least one plasticizer C is trisodium citrate.

13. Process for producing a hydraulic binder system according to any of Claims 1 to 12, comprising the step:
a) mixing of
- from 90.0 to 99.99% by weight of at least one calcined aluminum oxide A having an average particle size of from 0.3 to 25.0 µm and a BET surface area of from 0.5 to 30.0 m²/g; with
- from 0.01 to 10.0% by weight of at least one component B, selected from the group consisting of magnesium hydroxide, calcium hydroxide, strontium hydroxide, barium hydroxide and hydrates thereof, magnesium oxide, calcium oxide, strontium oxide and barium oxide;
where the respective proportions by weight are based on the total amount of the hydraulic binder system.

14. Process according to Claim 13, **characterized in that** from 0.05 to 4.95% by weight of at least one plasticizer C is added during or after step a).

15. Process according to Claim 13 or 14, **characterized in that** the mixing of the at least one calcined aluminum oxide A with the at least one component B and optionally at least one plasticizer C in step a) is carried out by joint milling.

16. Use of a hydraulic binder system according to any of Claims 1 to 12 in refractory materials and fine-ceramic materials.

## Revendications

1. Système de liant hydraulique pour l'application dans des matériaux réfractaires, comprenant
a) 90,0 à 99,99 % en poids d'au moins un oxyde d'aluminium calciné A avec une granulométrie moyenne de 0,3 à 25,0 µm et une surface BET de 0,5 à 30,0 m²/g ; et
b) 0,01 à 10,0 % en poids d'au moins un composant B, choisi dans le groupe constitué de l'hydroxyde de magnésium, l'hydroxyde de calcium, l'hydroxyde de strontium, l'hydroxyde de baryum, et leurs hydrates, l'oxyde de magnésium, l'oxyde de calcium, l'oxyde de strontium et l'oxyde de baryum ;
dans lequel les proportions en poids respectives se rapportent à la quantité totale du système de liant hydraulique.

2. Liant selon la revendication 1, **caractérisé en ce que** 0,05 à 4,95 % en poids d'au moins un fluidifiant C sont en outre présents.

3. Système de liant selon la revendication 1 ou 2, **caractérisé en ce que** l'au moins un oxyde d'aluminium calciné A
a) est au moins un oxyde d'aluminium calciné A1 avec une granulométrie moyenne de 1,8 à 8,0 µm et une surface spécifique BET de 0,5 à 2,0 m²/g ;
ou
b) au moins un oxyde d'aluminium calciné A2 avec une granulométrie moyenne de 0,3 à 1,7 µm et une surface spécifique BET de 2,0 à 10,0 m²/g,
ou que
a) au moins un oxyde d'aluminium calciné A1 avec une granulométrie moyenne de 1,8 à 8,0 µm et une surface spécifique BET de 0,5 à 2,0 m²/g ;
et
b) au moins un oxyde d'aluminium calciné A2 avec une granulométrie moyenne de 0,3 à 1,7 µm et une surface spécifique BET de 2,0 à 10,0 m²/g sont présents.

4. Système de liant selon l'une des revendications 1 à 3, **caractérisé en ce qu'**au moins deux oxydes d'aluminium calcinés A différents sont présents.

5. Système de liant selon l'une des revendications 1 à 4, **caractérisé en ce qu'**au moins un oxyde d'aluminium A est revêtu.

6. Système de liant selon l'une des revendications 1 à 5, **caractérisé en ce qu'**au moins un oxyde d'aluminium A est revêtu, dans lequel l'agent de revêtement est l'acide phosphorique.

7. Système de liant selon l'une des revendications 1 à 6, **caractérisé en ce que** le composant B présente une granulométrie moyenne de 1,0 à 20,0 µm et une surface BET de 0,5 à 50,0 m²/g.

8. Système de liant selon l'une des revendications 1 à 7, **caractérisé en ce que** l'au moins un composant B est un oxyde de magnésium.

9. Système de liant selon l'une des revendications 1 à 7, **caractérisé en ce que** l'au moins un composant B est un hydroxyde de calcium.

10. Système de liant selon l'une des revendications 1 à 7, **caractérisé en ce que** l'au moins un composant B est un hydroxyde de strontium ou ses hydrates.

11. Système de liant selon l'une des revendications 1 à 7, **caractérisé en ce que** l'au moins un composant B est un hydroxyde de baryum ou ses hydrates.

12. Système de liant selon l'une des revendications 2 à 11, **caractérisé en ce que** l'au moins un fluidifiant C est le citrate trisodique.

13. Procédé de fabrication d'un système de liant hydraulique selon l'une des revendications 1 à 12, comprenant l'étape de :
a) mélange de
- 90,0 à 99,99 % en poids d'au moins un oxyde d'aluminium calciné A avec une granulométrie moyenne de 0,3 à 25,0 µm et une surface BET de 0,5 à 30,0 m²/g ; avec
- 0,01 à 10,0 % en poids d'au moins un composant B, choisi dans le groupe constitué de l'hydroxyde de magnésium, l'hydroxyde de calcium, l'hydroxyde de strontium, l'hydroxyde de baryum, et leurs hydrates, l'oxyde de magnésium, l'oxyde de calcium, l'oxyde de strontium et l'oxyde de baryum ;
dans lequel les proportions en poids respectives se rapportent à la quantité totale du système de liant hydraulique.

14. Procédé selon la revendication 13, **caractérisé en ce que**, pendant ou après l'étape a), 0,05 à 4,95 % en poids d'au moins un fluidifiant C sont ajoutés.

15. Procédé selon la revendication 13 ou 14, **caractérisé en ce que** le mélange de l'au moins un oxyde d'aluminium calciné A avec l'au moins un composant B et le cas échéant au moins un fluidifiant C s'effectue à l'étape a) par broyage conjoint.

16. Utilisation d'un système de liant hydraulique selon l'une des revendications 1 à 12 dans des matériaux réfractaires et des matériaux en céramique fine.
